# EUROPEAN PATENT SPECIFICATION

(11) **EP 3 900 225 B1**
(45) Date of publication and mention of the grant of the patent: **27.11.2024**
(21) Application number: 19773039.3
(22) Date of filing: 18.09.2019
(51) Int. Cl.: H04B 10/2507, H04B 10/69, H04J 14/06

(54) **EQUALIZING DEVICE FOR COMPENSATING RAPID STATE OF POLARIZATION CHANGES OF AN OPTICAL SIGNAL**
AUSGLEICHSVORRICHTUNG ZUR KOMPENSATION DES SCHNELLEN POLARISATIONSÄNDERUNGSZUSTANDS EINES OPTISCHEN SIGNALS
DISPOSITIF D'ÉGALISATION POUR COMPENSER DES CHANGEMENTS D'ÉTAT RAPIDE DE CHANGEMENTS DE POLARISATION D'UN SIGNAL OPTIQUE

(43) Date of publication of application: 27.10.2021
(73) Proprietor: Huawei Technologies Co., Ltd., Longgang District, Shenzhen, Guangdong 518129 (CN); Fraunhofer-Gesellschaft zur Förderung der angewandten Forschung e.V., 80686 München (DE)
(72) Inventor: PITTALA, Fabio, 80992 Munich (DE); SCHUBERT, Colja, 10587 Berlin (DE); ELSCHNER, Robert, 10587 Berlin (DE); SCHMIDT-LANGHORST, Carsten, 10587 Berlin (DE)
(74) Representative: Roth, Sebastian
(86) International application number: PCT/EP2019/075042
(87) International publication number: WO 2021/052579

(56) References cited:
- US-A1- 2016 315 724
- US-B2- 10 116 410
- US-B2- 7 315 575
- US-B2- 9 374 170
- ZHANG XU ET AL: "Joint Polarization Tracking and Equalization in Real-Time Coherent Optical Receiver", IEEE PHOTONICS TECHNOLOGY LETTERS, IEEE SERVICE CENTER, PISCATAWAY, NJ, US, vol. 31, no. 17, 1 September 2019 (2019-09-01), pages 1421 - 1424, XP011741762, ISSN: 1041-1135, [retrieved on 20190820], DOI: 10.1109/LPT.2019.2929824
- YEON MYUNG-HOON ET AL: "Stochastic analysis of an iterative semi-blind adaptive beamforming algorithm", 2007 15TH EUROPEAN SIGNAL PROCESSING CONFERENCE, IEEE, 3 September 2007 (2007-09-03), pages 535 - 539, XP032772893, ISBN: 978-83-921340-4-6, [retrieved on 20150430]

## Description

### TECHNICAL FIELD

The present invention generally relates to processing a digital signal, particularly performing equalization on the digital signal. The digital signal is specifically derived from an optical signal transmitted over a channel, and thus the invention also relates to channel estimation. The invention is concerned especially with performing equalization on the digital signal in the presence of rapid State of Polarization (SOP) changes of the optical signal, and thus the invention also relates to SOP estimation. The invention can be applied in the field of Optical Ground Wire (OPGW) cables.

The invention proposes an equalizing device, an optical receiver including the equalizing device, and an equalization method to be performed, for example, by the equalizing device or the optical receiver. The invention also proposes an optical signal including frames having a frame structure that enables the equalization of the rapid SOP changes.

### BACKGROUND

Amongst other technologies, OPGW cables have been used on overhead power transmission lines for lightning protection. This allows for a cheap deployment of optical fiber cables, which are placed in metal tubes in the center of the OPGW cables, and are shielded by one or more layers of armoring wires.

However, in recent years, field and laboratory measurements indicated that a magnetic field, which is generated along the axis of the conductors by a lightning induced current, changes the SOP of the light in the optical fiber very rapidly. This becomes an issue, especially when using coherent optical polarization multiplexed transmission schemes. An initial assessment of the potential impact on the tracking abilities of coherent Digital Signal Processing (DSP) integrated circuits was made, and the SOP speed due to lightning strikes was estimated to be of the order of a few Mrad/s.

Recent field trials confirmed this phenomenon, and measured SOP speeds up to 5.1Mrad/s. In recent laboratory experiments, fast SOP speeds even exceeding 8 Mrad/s were measured. Fast SOP changes are particularly an issue when using coherent optical polarization multiplexed transmission schemes of 100+Gb/s. Since most optical transceivers including commercial DSPs have been designed to withstand SOP changes mainly caused by mechanical vibrations, the SOP tracking capabilities are often only in the hundreds of Krad/s. Therefore, the industry arrived at a consensus that lightning strikes into OPGW cables can lead to traffic interruptions in metro and long-haul networks.

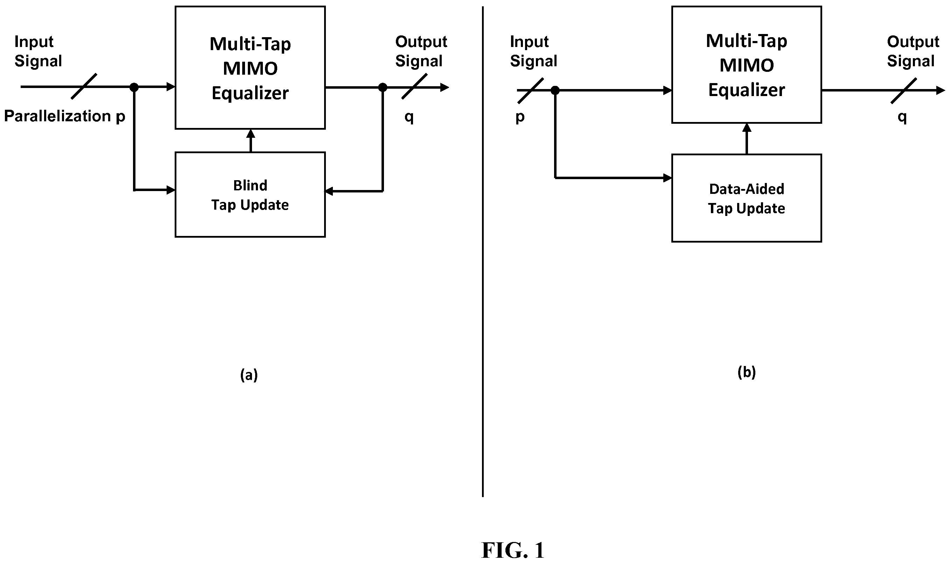

The polarization tracking capability of the DSP depends on the MIMO equalizer adaptation (or update) speed as it determines how fast the equalizer can follow transient polarization changes. The adaptation scheme can be either implemented using blind or data-aided approaches. In case of blind adaptation, the update relies solely on signal statistics, in particular on the expected signal constellation. While the data-aided adaptation uses predefined training sequences for channel estimation (CE) that are inserted at the transmitter at the cost of signaling overhead. With regard to the adaptation speed, both approaches have their advantages and disadvantages. For instance, the blind scheme, exemplarily shown in FIG. 1(a), enables continuous adaptation without introducing signaling overhead. However, it requires a feedback loop which limits the update speed, in particular in case of a high degree of sample parallelization p which is typical for optical transceivers. As an example, p = 64. In this case, a tap update is possible only every 64th symbol which means that the equalizer cannot adapt fast enough to follow fast polarization changes. The data-aided scheme, exemplarily shown in FIG. 1(b), can be implemented in a feed-forward structure and does not need a feedback loop. However, its adaptation speed depends on the repetition rate of the training sequence which is eventually limited by the required signaling overhead.

Most DSP application specific circuits (ASICs) available in the market use 2×2 MIMO equalizers based on gradient algorithms, such as the constant-modulus algorithm or the decision-directed least-mean-square (DD-LMS) algorithm. Considering also other processing algorithms, it seems possible to design 100G dual-polarization quadrature phase shift keying (DP-QPSK) DSP-ASICs able to track SOP rotation speeds up to a few hundred of Krad/s, covering most of the SOP transients occurring in buried fiber links and some cases of lightning. For higher-order Quadrature Amplitude Modulation (QAM), the SOP tracking capability of such DSPs is drastically reduced. While DSP based on 2×2 MIMO channel estimation improves the performance of the 2×2 MIMO equalizer, ultra-fast SOP rotation speeds due to currents induced by lightning on aerial fiber links cannot be tracked and compensated, unless unpractical training-overhead is used.

Hence, an advanced equalizer for compensating very fast SOP Changes is desired.

US 9 374 170 B2 discloses an optical receiving device including an adaptive equalizer that includes a position estimation unit configured to estimate, based on a first signal component and a second signal component of a reception signal generated by reception of a training sequence pattern transmitted from an optical transmitter, a symbol position of the reception signal, and generates an estimated symbol position, a delay unit configured to provide a delay difference between the first signal component and the second signal component, a control unit configured to set a plurality of symbol displacement amount candidates of displacement amounts for the estimated symbol position, causes the delay unit to generate a plurality of delay differences, and generates a channel estimation symbol position used for channel estimation, and an error rate calculation unit configured to calculate an error rate of the signal restored by an adaptive equalization unit. US 7 315 575 B2 discloses an equalization strategy for compensating channel distortions in a dual-polarization optical transport system wherein the received signal includes a complex signal of a first transmitted polarization component and a complex signal of a second transmitted polarization component. In a first step, a blind self recovery mode used a blind adaptation algorithm in calculating and modifying multiple complex equalizer transfer function coefficients to enables recovery of only the complex signal of the first transmitted polarization component. In a second step, equalization is performed in a training mode for recovery of the complex signals of the first and second transmitted polarization components. In a third step, equalization is performed in a data directed mode. The method is suited for a digital signal processing implementation in a coherent receiver.

### SUMMARY

In view of the above-mentioned issues, embodiments of the invention aim to improve the tracking and compensating of SOP changes. The objective is to provide an equalizing device and method, particularly based on 2×2 MIMO equalization, capable of tracking and compensating fast SOP changes (in the order of Mrad/s) of an optical signal. For instance, to track and compensate SOP changes caused by lightning strikes into OPGW cables. The invention also aims for digital signal processing on a digital signal derived from the optical signal to compensate the rapid SOP changes. Thereby, the invention aims for an efficient implementation of the equalization and combination with other conventional equalization.

The objective is achieved by the embodiments provided in the enclosed independent claims. Advantageous implementations of the embodiments of the invention are further defined in the dependent claims.

In particular, the embodiments of the invention propose combining two adaptation schemes of the 2×2 MIMO equalizer, in order to process a digital signal derived from an optical signal, and thereby to compensate fast SOP changes of the optical signal.

A first aspect of the invention provides an equalizing device configured to process a digital signal representing samples of an optical signal received via a channel, each sample comprising two polarization components associated with two mutually orthogonal polarizations of the optical signal, wherein the digital signal comprises a training sequence followed by a payload, the equalizing device being configured to: generate a new instance of a 2×2 MIMO equalization filter based on one or more preceding instances of the equalization filter and on one or more samples of the payload, and equalize a sample of the payload by applying the new instance of the equalization filter to the sample.

The channel may comprise an optical fiber, notably an optical fiber surrounded at least partly by an electrically conductive shield. For example, the digital signal may be a sampled version of a Radio-Frequency (RF) signal carried by the optical signal. The RF signal and thus the digital signal may carry a baseband signal, which contains the training sequences. The baseband signal may further carry payload data.

The equalizing device is configured to perform a blind gradient algorithm based on the one or more preceding instances of the equalization filter and on the one or more samples of the payload.

The blind scheme enables a continuous adaptation without introducing signaling overhead.

The equalizing device is configured to perform a data-aided channel estimation based on the on the one or more samples of the training sequence, to obtain one or more initial coefficients.

With the support of the data-aided scheme, by means of the training sequences, the device can efficiently remove effects of SOP rotations from the digital signal (slower and faster).

Since the 2×2 MIMO channel estimation may obtained in every training sequence, the equalizer architectures allow accessing the channel also during the very fast SOP transients. All benefits of training-aided channel estimation are furthermore preserved. The equalization is modulation format transparent, i.e. the constellation plot of the payload data can be different than that of the training-sequences.

The equalizing device is configured to perform the blind gradient algorithm based on the one or more preceding instances of the equalization filter, on the one or more samples of the payload, and on the one or more obtained initial coefficients.

The invention proposes a combination of the two adaptation schemes. The combined scheme provides significantly high SOP tracking speeds than the individual schemes.

In an implementation form of the first aspect, wherein the digital signal comprises a sequence of data blocks, each data block comprises a training sequence followed by a payload, and the equalizing device is further configured to: re-order the sequence of data blocks into p parallel samples per symbol, p being a positive integer, and each sample comprising at least one training sequence and a payload; and equalize each sample of the p parallel samples of the digital signal.

In order to allow the blind algorithm to operate with a faster tap update rate (up to the symbol rate R, i.e. a symbol-by-symbol update), independent on the parallelization factor q. it is required to re-order the samples. The faster update rate will allow for tracking of faster SOP changes.

In a further implementation form of the first aspect, the equalizing device is further configured to re-order the sequence of data blocks using a first in first out, FIFO, mechanism.

By reordering the samples using FIFOs, each of the independent payload blocks will be serialized.

In a further implementation form of the first aspect, the equalizing device is further configured to buffer the reordered p parallel samples before the equalization is performed.

In an implementation form of the first aspect, the equalizing device is configured to compensate faster changes of a SOP of the optical signal by equalizing the samples of the optical signal.

In an implementation form of the first aspect, the equalizing device is configured to perform a DD-LMS update equalization.

After reordering the samples, a data-aided channel estimation scheme based on training sequences is used to calculate the initial tap weights for the blind tap update for each payload block. Afterwards, each payload block can be independently processed with the blind gradient tap-adaptation stage, e.g. the DD-LMS.

In an implementation form of the first aspect, the equalizing device is configured to down-sample an input signal of p equalized samples per symbol to obtain an output signal of q samples per symbol, wherein q is a positive integer different from p.

In particular, q refers to a parallelization factor after the down-sampling.

In a further implementation form of the first aspect, the equalizing device is further configured to perform a blind gradient algorithm based on the one or more preceding instances of the equalization filter, the one or more samples of the payload, and the obtained output signal.

Notably, the blind gradient algorithm is performed on the down-sampled signal.

In an implementation form of the first aspect, the digital signal has a signal symbol rate R, wherein R is a positive integer.

In a further implementation form of the first aspect, the equalizing device is configured to operate with a tap update rate up to R, in particular, wherein a tap update rate is R/2 or R/4.

While a symbol-by-symbol tap update rate would allow the fastest tracking, the drawback is that large data buffering will lead to latency, if q frames need to be buffered. This can be avoided by choosing tap update rates of R/2, R/4, ..., for which then only q/2, q/4, ... frames need to be buffered.

A second aspect of the invention provides an optical receiver, particularly coherent optical receiver, including an equalizing device according to the first aspect or any of its implementation forms, wherein the optical receiver is configured to receive the optical signal over the channel and to derive the digital signal from the optical signal.

Optionally, the optical receiver is configured to derive the digital signal from the optical signal by deriving a RF signal from the optical signal and sampling the RF signal. For example, the optical receiver may comprise a coherent detector configured to derive the RF signal from the optical signal, and an Analog-to-Digital Converter (ADC) for sampling the RF signal. The digital signal will in this case be a sampled version of the RF signal derived from the optical signal.

A third aspect of the invention provides a method for processing a digital signal representing samples of an optical signal received via a channel, each sample comprising two polarization components associated with two mutually orthogonal polarizations of the optical signal, wherein the digital signal comprises a training sequence followed by a payload, the method comprising: generating a new instance of a 2x2 Multiple Input Multiple Output, MIMO, equalization filter based on one or more preceding instances of the equalization filter and on one or more samples of the payload data, and equalizing a sample of the payload by applying the new instance of the 2x2 MIMO equalization filter to the sample.

In the third aspect, the generating of the new instance of the equalization filter comprises performing a blind gradient algorithm based on the one or more preceding instances of the equalization filter and on the one or more samples of the payload data; performing a data-aided channel estimation based on the one or more samples of the training sequence, to obtain one or more initial coefficients; and performing the blind gradient algorithm based on the one or more preceding instances of the equalization filter, on the one or more samples of the payload, and on the one or more obtained initial coefficients.

The method of the third aspect and its implementation forms achieve the advantages described above for the device of the first aspect and it respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. The invention is defined in the independent claims. Advantageous embodiments are set out in the dependent claims.

### BRIEF DESCRIPTION OF DRAWINGS

The above described aspects and implementation forms of the present invention will be explained in the following description of specific embodiments in relation to the enclosed drawings, in which
- FIG. 1: show examples of MIMO equalizer.
- FIG. 2: shows an equalizing device according to an embodiment of the invention.
- FIG. 3: shows an optical receiver according to an embodiment of the invention.
- FIG. 4: shows an equalizing device according to an embodiment of the invention.
- FIG. 5: shows a sample flow through a 2x2 MIMO equalization filter according to an embodiment of the invention.
- FIG. 6: shows an implementation of a sample-reordering block according to an embodiment of the invention.
- FIG. 7: shows an equalizing device according to an embodiment of the invention.
- FIG. 8: shows a method according to an embodiment of the invention.

### DETAILED DESCRIPTION OF THE EMBODIMENTS

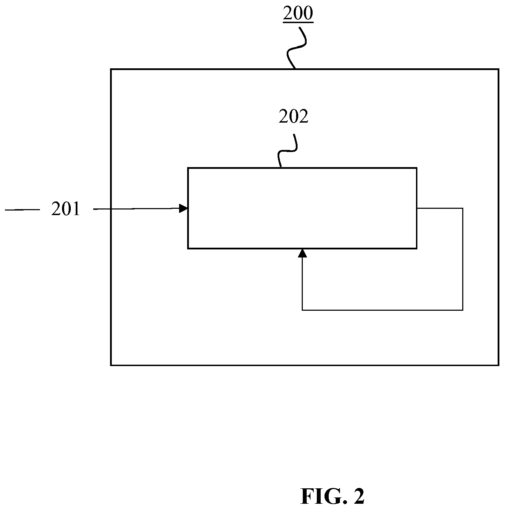

FIG. 2 shows an equalizing device 200 according to an embodiment of the invention. The equalizing device 200 may comprise processing circuitry (not shown) configured to perform, conduct or initiate the various operations of the equalizing device 200 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multipurpose processors. In one embodiment, the processing circuitry comprises one or more processors and a non-transitory memory connected to the one or more processors. The non-transitory memory may carry executable program code which, when executed by the one or more processors, causes the equalizing device 200 to perform, conduct or initiate the operations or methods described herein.

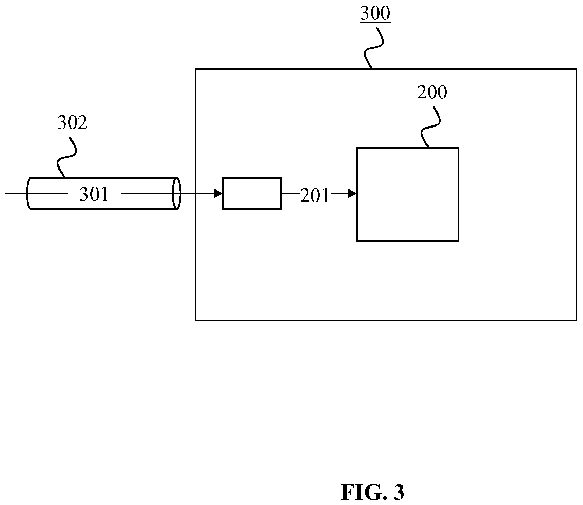

The equalizing device 200 is particularly configured to process a digital signal 201. The digital signal 201 is derived, e.g. may be generated from, e.g. by an optical receiver 300, from an optical signal 301 received via a transmission channel 302 (see FIG. 3). In particular, the digital signal 201 represents samples of the optical signal 301. Each sample comprises two polarization components associated with two mutually orthogonal polarizations of the optical signal 301. The digital signal 201 comprises a training sequence 2011 followed by a payload 2012.

The equalizing device 200 comprises a number of units or modules, including a 2x2 MIMO equalization filter 202. The equalizing device 200 is configured to generate a new instance of the 2x2 MIMO equalization filter 202 based on one or more preceding instances of the equalization filter 202 and on one or more samples of the payload 2012. The equalizing device 200 is further configured to equalize a sample of the payload 2012 by applying the new instance of the equalization filter 202 to the sample.

The equalizing device 200 is configured to, by means of the MIMO equalization filter 202, compensate faster changes of the SOP of the optical signal 301 by equalizing the samples of the optical signal 301.

FIG. 3 shows an optical receiver 300 according to an embodiment of the invention. The optical receiver 300 includes at least one device 200 as shown in FIG. 2. The optical receiver 300 may particularly be a coherent optical receiver, i.e. may be a receiver configured to receive and process a coherent optical signal.

The optical receiver 300 is configured to receive the optical signal 301 over the transmission channel 302, and to derive, e.g. generate, the digital signal 201 from the received optical signal 301. For instance, the optical receiver 300 may to this end comprise a coherent detector configured to derive an RF signal from the optical signal 301, and may further comprise an ADC configured to sample the RF signal. The digital signal 201 may in this case be a sampled version of the RF signal derived from the optical signal 301.

The optical receiver 300 is configured to, by means of the equalizing device 200, compensate slower as well as faster changes of the SOP of the optical signal 301.

Because of the nature of the channel estimation approach, time-varying channel variations between two training sequences cannot be estimated. Therefore, it is desired to perform tracking of time-varying effects in the payload data by the support of a blind gradient algorithm such as DD-LMS which conventionally supports a tap update rate of R/q, where R referring to the signal symbol rate, q referring to the parallelization factor after the down-sampling). As aforementioned, in a typical ASIC implementation, q is in the order of 64, so that the update rate is R/64.

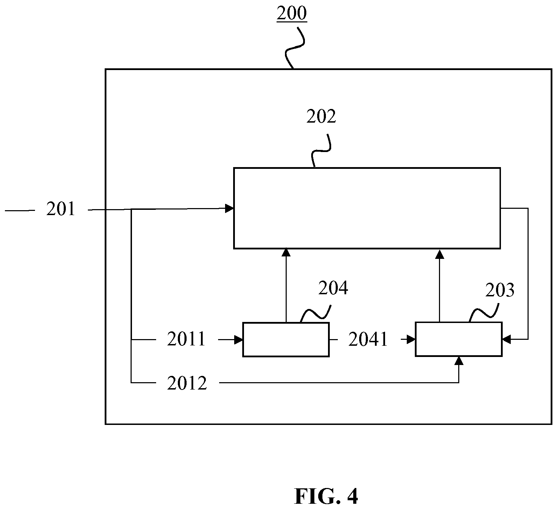

Therefore, the equalizing device 200, as shown in FIG. 1 and FIG. 2, according to the invention, is configured to perform a blind gradient algorithm 203 (see FIG. 4) based on the one or more preceding instances of the equalization filter 202 and on the one or more samples of the payload 2012.

A training-aided tap update block performs a tap-initialization of the MIMO equalization filter 202 at the beginning of each frame, based on the training sequence inserted between the payload data (channel estimation). That is, the equalizing device 200, according to the invention, is configured to perform a data-aided channel estimation 204 (see FIG. 4) based on the on the one or more samples of the training sequence 2011, to obtain one or more initial coefficients 2041.

The Embodiments invention proposes a combined adaptation scheme. An equalizer architecture of the combination of the two adaptation schemes, according to the invention, is shown in FIG. 4. Notably, same elements in all figures are labeled with the same reference signs and function likewise. The equalizing devices 200 as illustrated in FIG. 2 to FIG. 4, respectively, may include also DSP units or modules, which are, for instance, used for symbols detection and/or allowing processing fractional oversampled data. In particular, DSP units of the equalizing devices 200 shown in FIG. 2 to FIG. 4, respectively, include units for carrying out at least one of serial/parallel conversion, an Overlap-Discard (OLD) method, Fast Fourier Transform (FFT) or inverse FFT (IFFT), Frame Alignment, Folding Decimation, signal buffering, carrier frequency offsetting, carrier phase compensation, symbol alignment or the like.

According to the invention, the equalizing device 200 as shown in FIG. 4, is further configured to perform the blind gradient algorithm 203 based on the one or more preceding instances of the equalization filter 202, on the one or more samples of the payload 2012, and on the one or more obtained initial coefficients. Notably, the one or more initial coefficients are obtained from the data-aided channel estimation 204 based on the training sequence 2011.

In this way, the combination of training-aided channel estimation and gradient-algorithm (i.e. LMS) adaptation to calculate the tap coefficients of the 2x2 MIMO equalizer is implemented, according to the invention. The combined scheme provides significantly higher SOP tracking speeds than the individual schemes. A signaling overhead and a degree of parallelization can also be reduced. This is because the invention allows updating the tap filter symbol by symbol, i.e. a updating the tap filter for every symbol, independent of the sample parallelization p.

The digital signal 201, according to an embodiment of the invention, may comprise a sequence of data blocks, where each data block comprises a training sequence followed by a payload. Accordingly, the equalizing device 200 may be further configured to re-order the sequence of data blocks into p parallel samples per symbol, p being a positive integer, and each sample comprising one or more training sequences and a payload. In addition, the equalizing device 200 may be also configured to equalize each sample of the p parallel samples of the digital signal 201.

According to an embodiment of the invention, a sample reordering block may be required to allow the blind algorithm to operate with a faster tap update rate (up to the symbol rate R, i.e. a symbol-by-symbol update), in order to be independent on the parallelization factor q. The faster update rate will allow for tracking of faster SOP changes. Moreover, the equalizing device 200 may be configured to re-order the sequence of data blocks using a FIFO mechanism.

According to an embodiment of the invention, the equalizing device 200 may be further configured to buffer the reordered p parallel samples before the equalization is performed.

While a symbol-by-symbol tap update rate would allow the fastest tracking, the drawback is that q frames need to be buffered in the sample reordering block, and large data buffering leads to latency. This can be avoided by choosing tap update rates of R/2, R/4, ... , for which then only q/2, q/4, ... frames need to be buffered. In this way, the equalizer architecture can be designed to provide an optimized trade-off between tracking speed and latency.

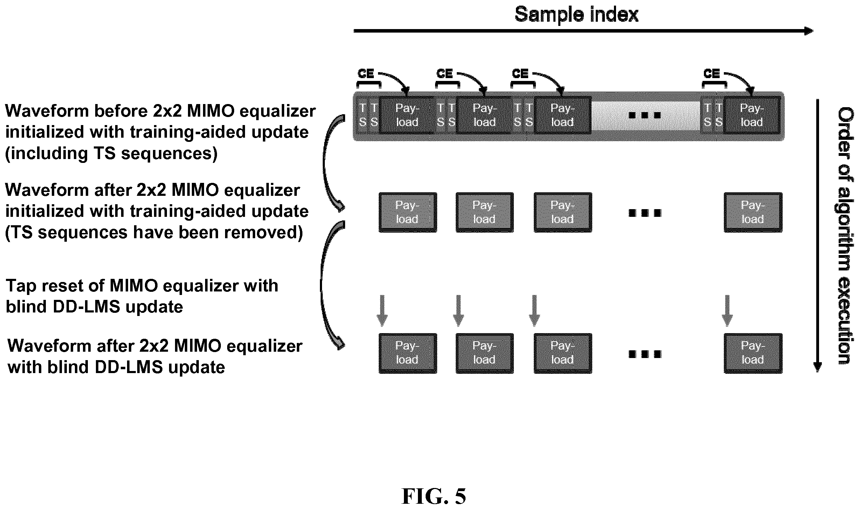

FIG. 5 shows a sample flow through an equalizing device 200. In particular, the equalizing device 200 may be the equalizing devices 200 as illustrated in FIG. 2 to FIG. 4. According to an embodiment of the invention, after the sequences of data blocks are reordered (e.g. by a sample reordering block), a data-aided channel estimation scheme based on training sequences is used to calculate the initial tap weights for the blind tap update for each payload block. Afterwards, each payload block can be independently processed with the blind gradient tap-adaptation stage, e.g. the DD-LMS.

In particular, input signal shown in FIG. 5 may be the digital signal 201 as shown in FIG. 2 to FIG. 4, which includes training sequences (TS as shown in FIG. 5) for channel estimation (CE). A pre-frame tap initialization of a 2×2 MIMO equalization filter 202 is preformed based on the CE. In particular, the 2×2 MIMO equalization filter 202 is the 2×2 MIMO equalization filter 202 as shown in FIG. 2 to FIG. 4. Further, a blind DD-LMS update adaptation is performed on output signal, e.g. from the 2×2 MIMO equalization filter 202.

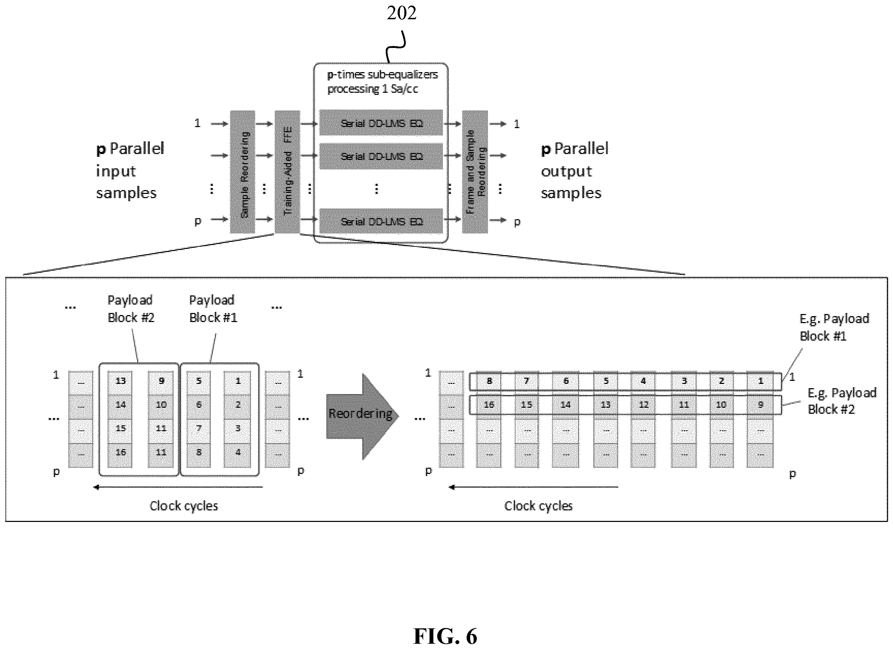

FIG. 6 shows an implementation of a sample-reordering block according to an embodiment of the invention. By reordering the samples using FIFOs, each of the independent payload blocks will be serialized. For instance, a 2×2 MIMO equalization filter 202 as shown in FIG. 6 can consist of p sub-equalizers. Each sub-equalizer processes only 1 Sa per clock cycle (1 Sa/cc), but uses a symbol-by-symbol blind DD-LMS update to maximize the tracking speed of the equalizer.

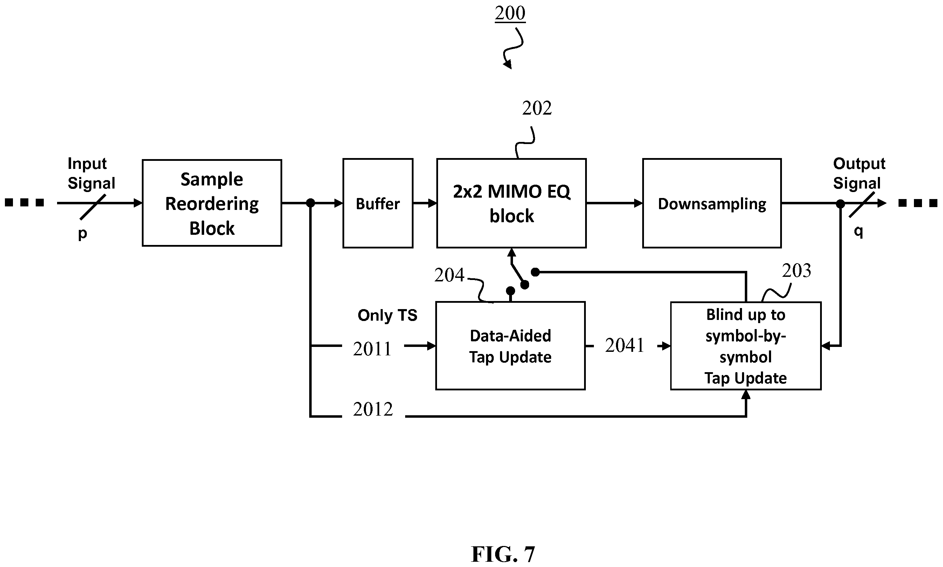

FIG. 7 shows an architecture of the combination of the two adaptation schemes according to an embodiment of the invention. In particular, a training-aided tap update followed by a blind symbol-by-symbol tap update is performed by the equalizing device 200 as shown in FIG. 7. The sample re-ordering block is required to improve the tolerance with respect to SOP rotations of the blind tap adaptation algorithm. Further, the equalizing device 200 may be also configured to down-sample an input signal of p equalized samples per symbol to obtain an output signal of q samples per symbol, wherein q is a positive integer different from p. Particularly, this may be performed by a downsampling block included by the equalizing device 200, as shown in FIG. 7.

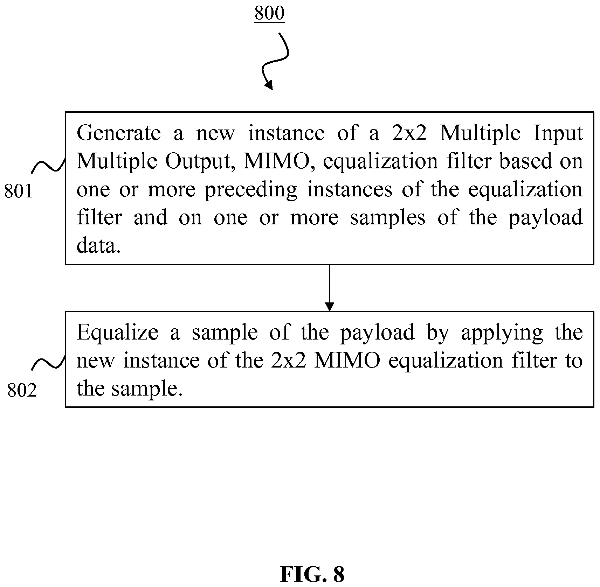

FIG. 8 shows a method 800 according to an embodiment of the invention. The method 800 is for processing a digital signal 201 representing samples of an optical signal 301 received via a channel 302. In particular, each sample comprising two polarization components associated with two mutually orthogonal polarizations of the optical signal 301. The digital signal 201 comprises a training sequence 2011 followed by a payload 2012. The method 800 may be carried out by the equalizing device 200 shown in FIG. 2 (or FIG. 3, 4 or 7) or by the optical receiver 300 shown in FIG. 3.

The method 800 comprises a step 801 of generating a new instance of a 2x2 MIMO equalization filter 202 based on one or more preceding instances of the equalization filter 202 and on one or more samples of the payload data 2012. The method 800 also comprises a step 802 of equalizing a sample of the payload 2012 by applying the new instance of the 2x2 MIMO equalization filter 202 to the sample.

In the step 801 of generating the new instance of the equalization filter 202, the method further comprises performing a blind gradient algorithm based on the one or more preceding instances of the equalization filter 202 and on the one or more samples of the payload data 2012.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation within the scope of the invention as defined by the appended claims.

## Claims

1. An equalizing device (200) for processing a digital signal (201) representing samples of an optical signal (301) received via a channel (302), each sample comprising two polarization components associated with two mutually orthogonal polarizations of the optical signal (301), wherein the digital signal (201) comprises a training sequence (2011) followed by a payload (2012), the equalizing device (200) being configured to:
generate a new instance of a 2x2 Multiple Input Multiple Output, MIMO, equalization filter (202) based on one or more preceding instances of the equalization filter (202) and on one or more samples of the payload (2012), and
equalize a sample of the payload (2012) by applying the new instance of the equalization filter (202) to the sample;
wherein to generate a new instance of the equalization filter (202) the equalizing device (200) is further configured to
perform a data-aided channel estimation (204) based on the one or more samples of the training sequence (2011), to obtain one or more initial coefficients (2041); and
perform a blind gradient algorithm (203) based on the one or more preceding instances of the equalization filter (202), on the one or more samples of the payload (2012), and on the one or more obtained initial coefficients (2041).

2. The equalizing device (200) according to claim 1, wherein the digital signal (201) comprises a sequence of data blocks, each data block comprises a training sequence followed by a payload, and the equalizing device (200) is further configured to:
re-order the sequence of data blocks into p parallel samples per symbol, p being a positive integer, and each sample comprising at least one training sequence and a payload; and
equalize each sample of the p parallel samples of the digital signal (201).

3. The equalizing device (200) according to claim 2, configured to:
re-order the sequence of data blocks using a first in first out, FIFO, mechanism.

4. The equalizing device (200) according to claim 2 or 3, configured to:
buffer the reordered p parallel samples before the equalization is performed.

5. The equalizing device (200) according to any one of claims 1 to 4, configured to:
compensate faster changes of a State of Polarization, SOP, of the optical signal (301) by equalizing the samples of the optical signal (301).

6. The equalizing device (200) according to any one of claims 1 to 5, configured to:
perform a blind decision-directed least-mean-square, DD-LMS, update equalization.

7. The equalizing device (200) according to any one of claims 1 to 6, configured to:
down-sample an input signal of p equalized samples per symbol to obtain an output signal of q samples per symbol, wherein q is a positive integer different from p.

8. The equalizing device (200) according to claim 7, configured to
perform a blind gradient algorithm based on the one or more preceding instances of the equalization filter (202), the one or more samples of the payload, and the obtained output signal.

9. The equalizing device (200) according to any one of claims 1 to 8, wherein
the digital signal (201) has a signal symbol rate R, wherein R is a positive integer.

10. The equalizing device (200) according to claim 9, configured to:
operate with a tap update rate up to R, in particular, wherein a tap update rate is R/2 or R/4.

11. An optical receiver (300), particularly a coherent optical receiver, including an equalizing device (200) according to any one of the claims 1 to 10, wherein
the optical receiver (300) is configured to receive the optical signal (301) over the channel (302) and to derive the digital signal (201) from the optical signal (301).

12. A method (800) for processing a digital signal (201) representing samples of an optical signal (301) received via a channel (302), each sample comprising two polarization components associated with two mutually orthogonal polarizations of the optical signal, wherein the digital signal (201) comprises a training sequence (2011) followed by a payload (2012), the method (800) comprising:
generating (801) a new instance of a 2x2 Multiple Input Multiple Output, MIMO, equalization filter (202) based on one or more preceding instances of the equalization filter (202) and on one or more samples of the payload data (2012), and
equalizing (802) a sample of the payload (2012) by applying the new instance of the 2x2 MIMO equalization filter (202) to the sample,
wherein the step of generating a new instance of the equalization filter (302) further comprises:
performing a data-aided channel estimation (204) based on the one or more samples of the training sequence (2011), to obtain one or more initial coefficients (2041), and
performing a blind gradient algorithm (203) based on the one or more preceding instances of the equalization filter (202), on the one or more samples of the payload (2012), and on the one or more obtained initial coefficients (2041).

## Patentansprüche

1. Ausgleichsvorrichtung (200) zum Verarbeiten eines digitalen Signals (201), das Abtastwerte eines über einen Kanal (302) empfangenen optischen Signals (301) repräsentiert, wobei jeder Abtastwert zwei Polarisationskomponenten umfasst, die zwei zueinander orthogonalen Polarisationen des optischen Signals (301) zugeordnet sind, wobei das digitale Signal (201) eine Trainingssequenz (2011) gefolgt von einer Nutzlast (2012) umfasst, wobei die Ausgleichsvorrichtung (200) dazu konfiguriert ist:
einen neuen Fall eines 2x2-MIMO-Ausgleichsfilters ("Multiple Input Multiple Output") (202) basierend auf einem oder mehreren vorhergehenden Fällen des Ausgleichsfilters (202) und auf einem oder mehreren Abtastwerten der Nutzlast (2012) zu erzeugen, und
einen Abtastwert der Nutzlast (2012) durch Anwenden des neuen Falls des Ausgleichsfilters (202) auf den Abtastwert auszugleichen;
wobei, um einen neuen Fall des Ausgleichsfilters (202) zu erzeugen, die Ausgleichsvorrichtung (200) ferner dazu konfiguriert ist:
eine datengestützte Kanalschätzung (204) basierend auf dem einen oder den mehreren Abtastwerten der Trainingssequenz (2011) durchzuführen, um einen oder mehrere Anfangskoeffizienten (2041) zu erhalten; und
einen blinden Gradientenalgorithmus (203) basierend auf der einen oder den mehreren vorhergehenden Fällen des Ausgleichsfilters (202), auf dem einen oder den mehreren Abtastwerten der Nutzlast (2012) und auf dem einen oder den mehreren erhaltenen Anfangskoeffizienten (2041) durchzuführen.

2. Ausgleichsvorrichtung (200) nach Anspruch 1, wobei das digitale Signal (201) eine Sequenz von Datenblöcken umfasst, wobei jeder Datenblock eine Trainingssequenz gefolgt von einer Nutzlast umfasst, und die Ausgleichsvorrichtung (200) ferner dazu konfiguriert ist:
die Sequenz von Datenblöcken in p parallele Abtastungen pro Symbol umzuordnen, wobei p eine positive ganze Zahl ist und jeder Abtastwert mindestens eine Trainingssequenz und eine Nutzlast umfasst, und
jeden Abtastwert der p parallelen Abtastwerte des digitalen Signals (201) auszugleichen.

3. Ausgleichsvorrichtung (200) nach Anspruch 2, die dazu konfiguriert ist:
die Sequenz der Datenblöcke unter Verwendung eines FIFO-Mechanismus ("First In First Out") umzuordnen.

4. Ausgleichsvorrichtung (200) nach Anspruch 2 oder 3, die dazu konfiguriert ist:
die umgeordneten p parallelen Abtastwerte zwischenzuspeichern, bevor die Ausgleichung durchgeführt wird.

5. Ausgleichsvorrichtung (200) nach einem der Ansprüche 1 bis 4, die dazu konfiguriert ist:
schnellere Änderungen eines Polarisationszustandes (State of Polarization), SOP, des optischen Signals (301) durch Ausgleichen der Abtastwerte des optischen Signals (301) zu kompensieren.

6. Ausgleichsvorrichtung (200) nach einem der Ansprüche 1 bis 5, die dazu konfiguriert ist:
einen blinden entscheidungsgeleiteten DD-LMS-Aktualisierungsausgleich ("Decision-Directed Least Mean Square") durchzuführen.

7. Ausgleichsvorrichtung (200) nach einem der Ansprüche 1 bis 6, die dazu konfiguriert ist:
ein Eingangssignal mit p ausgeglichenen Abtastwerten pro Symbol abwärts abzutasten, um ein Ausgangssignal mit q Abtastwerten pro Symbol zu erhalten, wobei q eine positive ganze Zahl ist, die sich von p unterscheidet.

8. Ausgleichsvorrichtung (200) nach Anspruch 7, die dazu konfiguriert ist:
einen blinden Gradientenalgorithmus basierend auf dem einen oder mehreren vorhergehenden Fällen des Ausgleichsfilters (202), den einen oder mehreren Abtastwerten der Nutzlast und dem erhaltenen Ausgangssignal durchzuführen.

9. Ausgleichsvorrichtung (200) nach einem der Ansprüche 1 bis 8, wobei das digitale Signal (201) eine Signalsymbolrate R hat, wobei R eine positive ganze Zahl ist.

10. Ausgleichsvorrichtung (200) nach Anspruch 9, die dazu konfiguriert ist:
mit einer Abgriffsaktualisierungsrate bis zu R zu arbeiten, wobei insbesondere eine Abgriffsaktualisierungsrate R/2 oder R/4 ist.

11. Optischer Empfänger (300), insbesondere ein kohärenter optischer Empfänger, der eine Ausgleichsvorrichtung (200) nach einem der Ansprüche 1 bis 10 beinhaltet, wobei der optische Empfänger (300) dazu konfiguriert ist, das optische Signal (301) über den Kanal (302) zu empfangen und das digitale Signal (201) von dem optischen Signal (301) abzuleiten.

12. Verfahren (800) zum Verarbeiten eines digitalen Signals (201), das Abtastwerte eines über einen Kanal (302) empfangenen optischen Signals (301) repräsentiert, wobei jeder Abtastwert zwei Polarisationskomponenten umfasst, die zwei zueinander orthogonalen Polarisationen des optischen Signals zugeordnet sind, wobei das digitale Signal (201) eine Trainingssequenz (2011) gefolgt von einer Nutzlast (2012) umfasst, wobei das Verfahren (800) umfasst:
Erzeugen (801) eines neuen Falls eines 2x2-MIMO-Ausgleichsfilters (Multiple Input Multiple Output) (202) basierend auf einem oder mehreren vorhergehenden Fällen des Ausgleichsfilters (202) und auf einem oder mehreren Abtastwerten der Nutzlastdaten (2012), und
Ausgleichen (802) eines Abtastwertes der Nutzlast (2012) durch Anwenden des neuen Falls des 2x2-MIMO-Ausgleichsfilters (202) auf den Abtastwert, wobei der Schritt des Erzeugens eines neuen Falls des Ausgleichsfilters (302) ferner umfasst:
Durchführen einer datengestützten Kanalschätzung (204) basierend auf dem einen oder den mehreren Abtastwerten der Trainingssequenz (2011), um einen oder mehrere Anfangskoeffizienten (2041) zu erhalten; und
Durchführen eines blinden Gradientenalgorithmus (203) basierend auf dem einen oder den mehreren vorhergehenden Fällen des Ausgleichsfilters (202), auf dem einen oder den mehreren Abtastwerten der Nutzlast (2012) und auf dem einen oder mehreren erhaltenen Anfangskoeffizienten (2041).

## Revendications

1. Dispositif d'égalisation (200) pour traiter un signal numérique (201) représentant des échantillons d'un signal optique (301) reçu par l'intermédiaire d'un canal (302), chaque échantillon comprenant deux composantes de polarisation associées à deux polarisations mutuellement orthogonales du signal optique (301), le signal numérique (201) comprenant une séquence d'apprentissage (2011) suivie d'une charge utile (2012), le dispositif d'égalisation (200) étant configuré pour :
générer une nouvelle instance d'un filtre d'égalisation 2×2 à entrées multiples et sorties multiples, MIMO (202) sur la base d'une ou plusieurs instances précédentes du filtre d'égalisation (202) et d'un ou plusieurs échantillons de la charge utile (2012), et
égaliser un échantillon de la charge utile (2012) en appliquant la nouvelle instance du filtre d'égalisation (202) à l'échantillon ;
pour générer une nouvelle instance du filtre d'égalisation (202), le dispositif d'égalisation (200) étant en outre configuré pour :
réaliser une estimation de canal assistée par des données (204) sur la base du ou des échantillons de la séquence d'apprentissage (2011), pour obtenir un ou plusieurs coefficients initiaux (2041) ; et
réaliser un algorithme de gradient aveugle (203) sur la base de la ou des instances précédentes du filtre d'égalisation (202), du ou des échantillons de la charge utile (2012) et du ou des coefficients initiaux obtenus (2041).

2. Dispositif d'égalisation (200) selon la revendication 1, le signal numérique (201) comprenant une séquence de blocs de données, chaque bloc de données comprenant une séquence d'apprentissage suivie d'une charge utile, et le dispositif d'égalisation (200) étant en outre configuré pour :
réorganiser la séquence de blocs de données en p échantillons parallèles par symbole, p étant un nombre entier positif, et chaque échantillon comprenant au moins une séquence d'apprentissage et une charge utile ; et
égaliser chaque échantillon des p échantillons parallèles du signal numérique (201).

3. Dispositif d'égalisation (200) selon la revendication 2, configuré pour :
réordonner la séquence de blocs de données à l'aide d'un mécanisme FIFO, premier entré, premier sorti.

4. Dispositif d'égalisation (200) selon la revendication 2 ou 3, configuré pour :
mettre en mémoire tampon les p échantillons parallèles réordonnés avant que l'égalisation ne soit réalisée.

5. Dispositif d'égalisation (200) selon l'une quelconque des revendications 1 à 4, configuré pour :
compenser les changements plus rapides d'un état de polarisation, SOP, du signal optique (301) en égalisant les échantillons du signal optique (301).

6. Dispositif d'égalisation (200) selon l'une quelconque des revendications 1 à 5, configuré pour :
réaliser une égalisation de mise à jour de procédé des moindres carrés moyens dirigé par décision aveugle, DD-LMS.

7. Dispositif d'égalisation (200) selon l'une quelconque des revendications 1 à 6, configuré pour :
sous-échantillonner un signal d'entrée de p échantillons égalisés par symbole pour obtenir un signal de sortie de q échantillons par symbole, q étant un nombre entier positif différent de p.

8. Dispositif d'égalisation (200) selon la revendication 7, configuré pour :
réaliser un algorithme de gradient aveugle sur la base de la ou des instances précédentes du filtre d'égalisation (202), du ou des échantillons de la charge utile et du signal de sortie obtenu.

9. Dispositif d'égalisation (200) selon l'une quelconque des revendications 1 à 8,
le signal numérique (201) ayant un débit de symbole de signal R, R étant un nombre entier positif.

10. Dispositif d'égalisation (200) selon la revendication 9, configuré pour :
fonctionner avec un taux de mise à jour de prise allant jusqu'à R, en particulier, le taux de mise à jour de prise étant R/2 ou R/4.

11. Récepteur optique (300), notamment récepteur optique cohérent, comprenant un dispositif d'égalisation (200) selon l'une quelconque des revendications 1 à 10,
le récepteur optique (300) étant configuré pour recevoir le signal optique (301) sur le canal (302) et pour dériver le signal numérique (201) du signal optique (301).

12. Procédé (800) de traitement d'un signal numérique (201) représentant des échantillons d'un signal optique (301) reçu par l'intermédiaire d'un canal (302), chaque échantillon comprenant deux composantes de polarisation associées à deux polarisations mutuellement orthogonales du signal optique, le signal numérique (201) comprenant une séquence d'apprentissage (2011) suivie d'une charge utile (2012), le procédé (800) comprenant :
la génération (801) d'une nouvelle instance d'un filtre d'égalisation 2×2 à entrées multiples et sorties multiples, MIMO (202) sur la base d'une ou plusieurs instances précédentes du filtre d'égalisation (202) et d'un ou plusieurs échantillons des données de charge utile (2012), et
l'égalisation (802) d'un échantillon de la charge utile (2012) en appliquant la nouvelle instance du filtre d'égalisation 2×2 MIMO (202) à l'échantillon, l'étape de génération d'une nouvelle instance du filtre d'égalisation (302) comprenant en outre :
la réalisation d'une estimation de canal assistée par données (204) sur la base du ou des échantillons de la séquence d'apprentissage (2011), pour obtenir un ou plusieurs coefficients initiaux (2041), et
la réalisation d'un algorithme de gradient aveugle (203) sur la base de la ou des instances précédentes du filtre d'égalisation (202), du ou des échantillons de la charge utile (2012) et du ou des coefficients initiaux obtenus (2041).
